# EUROPÄISCHE PATENTANMELDUNG

(11) **EP 4 703 626 A1**
(43) Veröffentlichungstag der Anmeldung: **04.03.2026**
(21) Anmeldenummer: 25198480.3
(22) Anmeldetag: 27.08.2025
(51) Int. Cl.: F21S 41/148, F21S 41/24, F21S 41/32, F21S 43/14, F21S 43/239, F21S 43/243, F21S 43/31, F21S 43/40

(54) **OPTISCHES ELEMENT FÜR EINEN FAHRZEUGSCHEINWERFER**

(30) Priorität: 02.09.2024 CZ 20240341
(71) Anmelder: Skoda Auto a.s., 29301 Mladá Boleslav (CZ)
(72) Erfinder: Vittek, Eduard, 27601 M lník (CZ)

(57) **Zusammenfassung**

Das optische Element für einen Fahrzeugscheinwerfer, der einen Lichtleiter (6) und einen reflektierenden Vorsprung (7) umfasst. Das optische Element umfasst eine Eintrittsfläche (2), eine Kollimationsfläche (3), ein Paar der ersten Reflexionsflächen (4) und ein Paar der zweiten Reflexionsflächen (5). Die Kollimationsfläche (3) ist zum Lenken des in das optische Element eintretenden Lichts beschaffen. Ein Teil des Lichts wird auf der Kollimationsfläche (3) entlang der optischen Achse (14) des Lichtleiters (6) direkt auf eine Austrittsfläche (8) reflektiert und ein Teil des Lichts wird entlang der optischen Achse (14) des Lichtleiters (6) auf das Paar der ersten Reflexionsflächen (4) reflektiert. Jede Reflexionsfläche aus dem Paar der ersten Reflexionsflächen (4) ist zur Reflexion des Lichts von der Kollimationsfläche (3) zu einer zweiten Reflexionsfläche (5) beschaffen und jedes von dem Paar der zweiten Reflexionsflächen (5) ist zur Reflexion des Lichts von der jeweiligen ersten Reflexionsfläche (4) auf die Austrittsfläche (8) beschaffen. Der Lichtleiter (6) und der reflektierende Vorsprung (7) sind aus einem einzigen Materialblock gefertigt.

## Beschreibung

### Technisches Sachgebiet

Die vorliegende Erfindung betrifft Fahrzeugscheinwerfer. Konkret betrifft sie die Form und die Positionierung der Kollimations- und Reflexionsflächen.

### Stand der Technik

Nach dem heutigen Stand der Technik wird bei den Fahrzeugscheinwerfern in der Regel eine möglichst hohe Intensität und Homogenität des ausgestrahlten Lichts gefordert. Diese Anforderungen werden standardmäßig durch ein System von einer Kollimationsfläche und Reflexionsflächen erfüllt. Beim Durchgang der Lichtstrahlen durch den Körper des Lichtleiters kommt es jedoch zu Lichtstreuung, Reflexionen an den Wänden des Lichtleiters und folglich zu einem Verlust an Intensität und Homogenität der Beleuchtung. Die Verwendung mehrerer Lichtquellen zur Bereitstellung der erforderlichen Parameter ist kostspielig und strukturell nachteilig.

Das Dokument EP4206524 A1 beschreibt ein optisches System, das eine Lichtquelle und gekrümmte Reflexionsflächen umfasst. Die Lichtstrahlen werden an der ersten und zweiten Reflexionsfläche in einer zueinander senkrechten Richtung reflektiert. Die Krümmung der Reflexionsflächen bewirkt, dass die Austrittsstrahlen annähernd parallel zueinander verlaufen. Aufgrund der Anordnung der Reflexionsflächen hat diese Lösung jedoch einen hohen Raum- und Konstruktionsbedarf. Am Ausgang werden die Lichtstrahlen in der Mitte des Scheinwerfers konzentriert. Es wäre daher ratsam, eine Lösung zu finden, bei der die Homogenität der Beleuchtung nicht beeinträchtigt wird und gleichzeitig die Intensität der Beleuchtung beibehalten wird.

### Zusammenfassung der Erfindung

Die Mängel der aus dem Stand der Technik bekannten Lösungen werden bis zu einem gewissen Grad durch ein optisches Element für einen Fahrzeugscheinwerfer beseitigt, das einen Lichtleiter und einen mit dem Lichtleiter fest verbundenen reflektierenden Vorsprung umfasst. Das optische Element umfasst ferner eine Eintrittsfläche für den Lichteintritt von der Lichtquelle und eine Austrittsfläche für den Lichtaustritt aus dem optischen Element. Die Eintrittsfläche befindet sich auf dem reflektierenden Vorsprung und die Austrittsfläche auf dem Lichtleiter. Die optische Achse des Lichtleiters schneidet die Austrittsfläche. Ferner umfasst das optische Element eine Kollimationsfläche zum Lenken des in das optische Element eintretenden Lichts, wobei sich die Kollimationsfläche auf einem reflektierenden Vorsprung befindet und eine optische Achse des Lichtleiters die Kollimationsfläche schneidet.

Das optische Element umfasst ferner ein Paar erster Reflexionsflächen und ein Paar zweiter Reflexionsflächen, wobei sich das Paar der ersten Reflexionsflächen auf dem reflektierenden Vorsprung und das Paar der zweiten Reflexionsflächen auf dem Lichtleiter befindet. Die Eintrittsfläche für den Lichteintritt befindet sich zwischen der Kollimationsfläche und dem Paar der ersten Reflexionsflächen. Die Kollimationsfläche ist so beschaffen, dass sie einen Teil des Lichts entlang der optischen Achse des Lichtleiters direkt auf die Austrittsfläche und einen Teil des Lichts entlang der optischen Achse des Lichtleiters auf das Paar der ersten Reflexionsflächen reflektiert. Jede erste Reflexionsfläche ist zur Reflexion von der Kollimationsfläche auf eine zweite Reflexionsfläche und jede zweite Reflexionsfläche ist zur Reflexion des Lichts von der jeweiligen ersten Reflexionsfläche auf die Austrittsfläche beschaffen. Der Lichtleiter und der reflektierende Vorsprung sind aus einem Block (also aus einem Stück) Material gefertigt.

Der reflektierende Vorsprung kann mit einem beliebigen Teil seiner Außenfläche am Lichtleiter befestigt werden. Der Lichtleiter wird mit dem reflektierenden Vorsprung durch einen seiner Teile verbunden - Wand, Kante, abgerundetes Ende usw. Vorzugsweise kann die gerade Wand des reflektierenden Vorsprungs mit der geraden Wand des Lichtleiters verbunden werden. Der reflektierende Vorsprung ist zum Eintritt der von der Lichtquelle kommenden Lichtstrahlen, zum Lenken dieser Lichtstrahlen und zu deren Lenken in den Lichtleiter beschaffen. Andere optische Elemente, wie zum Beispiel Reflexionsflächen, Linsen usw., können sich vorteilhaft in dem reflektierenden Vorsprung befinden.

Der reflektierende Vorsprung kann aus einem bei der Herstellung von Fahrzeugscheinwerfern üblichen Material bestehen, zum Beispiel aus gehärtetem Kunststoff, der reflektierende Vorsprung ist aus demselben Material wie der Lichtleiter gefertigt.

Ein Bestandteil vom reflektierenden Vorsprung ist eine Kollimationsfläche, die zum Lenken der Lichtstrahlen in den Lichtleiter beschaffen ist. Die Kollimationsfläche ist zum Lenken der divergenten Lichtstrahlen von der Lichtquelle auf parallele - kollimierte - Lichtstrahlen ausgerichtet und geformt. Sie kann an jeder beliebigen Stelle des Körpers des reflektierenden Vorsprungs angeordnet werden, vorzugsweise ist die Kollimationsfläche gleichzeitig eine Wand des reflektierenden Vorsprungs. Bei der Herstellung des optischen Elements ist es nicht erforderlich, die Kollimationsfläche separat zu konstruieren und dann in das optische Element einzubauen; die Kollimationsfläche wird im Rahmen der Herstellung des reflektierenden Vorsprungs hergestellt. Die Kollimationsfläche kann durch eine Schicht eines reflektierenden Materials gebildet werden, die auf die Grundfläche aufgebracht wird. Das reflektierende Material kann eine dünne Metallschicht sein, zum Beispiel Aluminium, Chrom, Silber usw. Die Kollimationsfläche kann zum Beispiel flach, abgerundet, paraboloidförmig usw. sein.

Der Lichtleiter ist ein Teil des optischen Elements, der zum Leiten der Lichtstrahlen in Richtung zur Austrittsfläche bestimmt ist. Der Lichtleiter kann eine beliebige Form haben, die für den Einbau in ein Kraftfahrzeug geeignet ist. Die Austrittsfläche am Lichtleiter kann vorzugsweise der äußere Sichtbereich des Fahrzeugscheinwerfers sein.

Die optische Achse des Lichtleiters verläuft durch den Körper des Lichtleiters. Die optische Achse des Lichtleiters schneidet die Austrittsfläche und die Kollimationsfläche, was bedeutet, dass die Austrittsfläche und die Kollimationsfläche einander gegenüber liegen.

Ein Bestandteil vom reflektierenden Vorsprung ist eine Eintrittsfläche, an der die Lichtstrahlen von der Lichtquelle in das optische Element eintreten. An der Eintrittsfläche werden die Lichtstrahlen in Richtung der Kollimationsfläche gebrochen. Die Eintrittsfläche ist ein Bestandteil vom reflektierenden Vorsprung und ist vorzugsweise aus demselben Material wie der reflektierende Vorsprung gefertigt. Die Eintrittsfläche befindet sich zwischen dem Paar der ersten Reflexionsflächen und der Kollimationsfläche, vorzugsweise ist die Eintrittsfläche die untere Wand des reflektierenden Vorsprungs.

Die Eintrittsfläche kann entlang der optischen Achse des Lichtleiters verlaufen. Die Eintrittsfläche kann beispielsweise praktisch parallel zur Kollimationsfläche verlaufen, sie kann einen Winkel im Bereich von mindestens 1° und mindestens 179° einschließen, vorzugsweise schließt die Eintrittsfläche mit der Kollimationsfläche einen Winkel von 60° ein.

Ein Bestandteil vom optischen Element ist ferner ein Paar der ersten Reflexionsflächen und ein Paar der zweiten Reflexionsflächen. Das Paar der ersten Reflexionsflächen befindet sich auf dem reflektierenden Vorsprung, das Paar der ersten Reflexionsflächen befindet sich auf dem Lichtleiter. Die Reflexionsflächen im optischen Element sind zur effizienteren Ausrichtung der Lichtstrahlen von der Kollimationsfläche auf die Austrittsfläche beschaffen. Sie können die Form eines Paraboloids oder eines Hohlspiegels haben oder flach sein. Die Reflexionsflächen können zum Beispiel durch Aufbringen einer dünnen Schicht aus metallischem Material auf ein Trägermaterial hergestellt werden. Bei dem Metallmaterial kann es sich zum Beispiel um Aluminium, Chrom, Silber usw. handeln, bei dem Trägermaterial zum Beispiel um eine Glasplatte, eine Schicht aus gehärtetem Kunststoff usw. Vorzugsweise ist das Trägermaterial dasselbe wie der Teil des optischen Elements, auf dem sich das Metallmaterial befindet. Noch bevorzugter ist das Metallmaterial direkt auf einen Teil des optischen Elements aufgetragen - hier den reflektierenden Vorsprung oder den Lichtleiter. Durch das Auftragen der reflektierenden Metallschicht direkt auf den Körper des reflektierenden Vorsprungs oder des Lichtleiters werden die Anforderungen bei der Herstellung des optischen Elements reduziert.

Die Lichtstrahlen werden beim Auftreffen auf die Kollimationsfläche in einen Hauptstrahl des Lichts und einen Nebenstrahl des Lichts aufgeteilt. Alle Lichtstrahlen werden von der Kollimationsfläche entlang der optischen Achse des Lichtleiters reflektiert. Der Hauptstrahl des Lichts wird von der Kollimationsfläche in den Lichtleiter reflektiert und durch die Austrittsfläche direkt aus dem optischen Element ausgestrahlt. Die Nebenstrahlen des Lichts werden von der Kollimationsfläche auf das Paar der ersten Reflexionsflächen reflektiert. Der Nebenstrahl des Lichts wird an jeder Reflexionsfläche aus dem Paar der ersten Reflexionsflächen in Richtung einer Reflexionsfläche des Paars der zweiten Reflexionsflächen reflektiert. Jede Reflexionsfläche aus dem Paar der zweiten Reflexionsflächen reflektiert den Nebenstrahl des Lichts in den Lichtleiter und durch die Austrittsfläche aus dem optischen Element heraus.

Beim Durchgang der Lichtstrahlen durch das optische Element wird vorzugsweise eine Dreifachreflexion verwendet - durch die Kollimationsfläche, das erste Paar von Reflexionsflächen und das zweite Paar von Reflexionsflächen. Ohne die Verwendung von Paaren von Reflexionsflächen werden die Lichtstrahlen gestreut und die Intensität der resultierenden Lichtstrahlung wird folglich reduziert. Durch die Verwendung einer größeren Kollimationsfläche werden die Lichtstrahlen in einen Hauptstrahl des Lichts, der von einer Hälfte der Kollimationsfläche reflektiert wird, und in Nebenstrahlen des Lichts, die von der anderen Hälfte der Kollimationsfläche reflektiert werden, aufgeteilt. Durch die Lenkung der Nebenstrahlen des Lichts auf die vorgenannten Reflexionsflächen wird praktisch das gesamte Licht der Lichtquelle verarbeitet, so dass es keine Verluste gibt.

Der Lichtleiter und der reflektierende Vorsprung sind aus einem Materialblock gefertigt, so dass das gesamte optische Element aus einem Stück Material besteht. Bei der Herstellung des optischen Elements und dessen Einbau in das Fahrzeug wird dadurch die Anzahl der Fertigungsschritte reduziert und der konstruktive und finanzielle Aufwand wird verringert. Die Herstellung des optischen Elements und dessen Einbau in das Fahrzeug stellen somit geringere Anforderungen an Raum und Konstruktion als bei den aus dem Stand der Technik bekannten Lösungen.

Die Anpassungen der Flächen in der vorliegenden Erfindung werden vorteilhafterweise insbesondere durch die Form und die Ausrichtung der Flächen und unter Umständen zusätzlich durch ihre Position relativ zu anderen Flächen oder anderen optischen Elementen (insbesondere einer Lichtquelle) bestimmt. Die spezifische geometrische Umsetzung der Flächen kann beispielsweise mit einer optischen Simulationssoftware erfolgen, die den Fachleuten auf diesem Gebiet bekannt ist. Die spezifischen Ausgestaltungen dieser Flächen, von denen der Fachmann auf der Grundlage dieser Anmeldung eine Reihe erstellen kann, werden von der gewünschten Anwendung des optischen Elements, seinem Material, den räumlichen Anforderungen, dem Standort der Lichtquelle, den Parametern der Lichtquelle (zum Beispiel Wellenlänge des Lichts, Strahlungswinkel usw.) und möglicherweise anderen Faktoren nach dem Ermessen des Fachmanns beeinflusst.

Die Reflexionsflächen im Paar der ersten Reflexionsflächen können vorzugsweise mindestens eine gemeinsame Kante haben. Eine individuelle Kante jeder Reflexionsfläche aus dem Paar der ersten Reflexionsflächen befindet sich gegenüber der gemeinsamen Kante des Paares der ersten Reflexionsflächen. In einer Seitenansicht auf das optische Element liegen vorzugsweise die individuellen Kanten der Reflexionsflächen aus dem Paar der ersten Reflexionsflächen näher an der Austrittsfläche als die gemeinsame Kante des Paars der ersten Reflexionsflächen. Die Reflexionsflächen im Paar der ersten Reflexionsflächen schließen vorzugsweise einen stumpfen Winkel mit der Eintrittsfläche ein. Betrachtet man das optische Element von oben in der Richtung senkrecht zur optischen Achse des Lichtleiters bilden die Paare der Reflexionsflächen vorzugsweise ein Dreieck, dessen Spitze zur Kollimationsfläche gerichtet ist. Die von der Kollimationsfläche gelenkten Lichtstrahlen werden also in dieser vorteilhaften Anordnung entweder direkt auf die Austrittsfläche oder auf das erste Paar von Reflexionsflächen gelenkt. Dadurch wird der durch Lichtstreuung verursachte Verlust an Lichtstrahlung erheblich reduziert.

Die Reflexionsflächen im Paar der zweiten Reflexionsflächen können vorzugsweise auf der der Austrittsfläche gegenüberliegenden Seite des Lichtleiters neben der Kollimationsfläche angeordnet sein. Bei Betrachtung entlang der optischen Achse des Lichtleiters befindet sich daher jede Reflexionsfläche aus dem Paar der zweiten Reflexionsflächen vorzugsweise links und rechts neben der Kollimationsfläche, gegenüber der Austrittsfläche. Diese vorteilhafte Konstruktion gewährleistet die Reflexion der Lichtstrahlen durch das Paar von Reflexionsflächen, wobei die kompakten Abmessungen des optischen Elements erhalten bleiben.

Alle Flächen des optischen Elements, die zur Reflexion des Lichts beschaffen sind, - die Kollimationsfläche, das Paar der ersten Reflexionsflächen, das Paar der zweiten Reflexionsflächen - können vorteilhaft so geformt und ausgerichtet sein, dass sie die Lichtstrahlen durch Totalreflexion reflektieren. Das bedeutet, dass praktisch alle Lichtstrahlen, die auf die Kollimationsfläche treffen, in einen Hauptstrahl des Lichts und einen Nebenstrahl des Lichts aufgeteilt werden und praktisch alle Strahlen reflektiert werden - der Hauptstrahl des Lichts direkt auf die Austrittsfläche, die Nebenstrahlen des Lichts auf das Paar der ersten Reflexionsflächen. Praktisch das gesamte Bündel des Nebenstrahls des Lichts, das auf das Paar der ersten Reflexionsflächen fällt, wird auf das Paar der zweiten Reflexionsflächen reflektiert, und praktisch das gesamte Bündel des Nebenstrahls des Lichts, das auf das Paar der zweiten Reflexionsflächen fällt, wird auf die Austrittsfläche reflektiert. Das bedeutet, dass vorzugsweise nur ein Minimum an Strahlen außerhalb der Reflexionsflächen gestreut wird.

Die Reflexionsflächen im optischen Element können vorzugsweise die Form von Vierecken haben und gleichzeitig kann der Körper des Lichtleiters vorzugsweise auch die Form eines Vierecks haben, wenn man ihn entlang der optischen Achse des Lichtleiters betrachtet. Die Reflexionsflächen im Paar der ersten Reflexionsflächen und im Paar der zweiten Reflexionsflächen sind vorzugsweise flach. Vorzugsweise ist der Inhalt einer Reflexionsfläche aus dem Paar der ersten Reflexionsflächen derselbe wie der Inhalt der entsprechenden Reflexionsfläche des Paares der zweiten Reflexionsflächen. Durch die rechteckige Form der Reflexionsflächen und des Körpers des Lichtleiters, die relative Lage der Reflexionsflächen und die parallele Nutzung der Totalreflexion an den Reflexionsflächen wird vorzugsweise eine geringere Streuung der Lichtstrahlen außerhalb der Reflexionsflächen erreicht als bei aus dem Stand der Technik bekannten Lösungen. Durch die geringere Streuung der Lichtstrahlen kommt es zu einem geringeren Verlust an Intensität der Strahlung und einer geringeren Störung der Homogenität der Beleuchtung, so dass die Austrittsfläche des Lichtleiters auch bei Verwendung einer einzigen Lichtquelle gleichmäßiger beleuchtet wird.

Die Breite des Körpers des Lichtleiters, gemessen in horizontaler Richtung senkrecht zur optischen Achse des Lichtleiters, kann vorzugsweise die gleiche Breite wie die Summe der Breite der Kollimationsfläche und des Paares der zweiten Reflexionsflächen sein. Dies bedeutet, dass jede Reflexionsfläche aus dem Paar der zweiten Reflexionsflächen vorzugsweise an eine Seite der Kollimationsfläche anliegen kann, wenn man sie entlang der optischen Achse des Lichtleiters betrachtet. Die gegenüberliegende Seite der jeweiligen Reflexionsfläche kann dann in der gleichen Ansicht die Seitenkante des Lichtleiters bilden. Das an der Kollimationsfläche direkt in den Lichtleiter reflektierte Strahlenbündel wird dann links und rechts von den Strahlenbündeln der anderen Reflexionsflächen umgeben, und dieses dreifache Strahlenbündel tritt in den Lichtleiter ein und wird durch ihn zur Austrittsfläche geleitet. Die resultierende Lichtstrahlung verteilt sich daher gleichmäßig über nahezu die gesamte Austrittsfläche. Die Breite des Körpers des Lichtleiters gibt auch die Gesamtbreite des optischen Elements an.

Die senkrecht zur optischen Achse des Lichtleiters in vertikaler Richtung gemessene Höhe des Körpers des Lichtleiters kann vorzugsweise die gleiche sein wie die Höhe einer Reflexionsfläche aus dem Paar der zweiten Reflexionsflächen. Dies bedeutet, dass, entlang der optischen Achse des Lichtleiters gesehen, die Ober- und Unterseite des Paares der zweiten Reflexionsflächen die obere und untere Kante des Lichtleiters bilden können.

Die Höhe der Kollimationsfläche kann vorzugsweise gleich der Summe der Höhe einer Reflexionsfläche aus dem Paar der ersten Reflexionsflächen und der Höhe einer Reflexionsfläche aus dem Paar der zweiten Reflexionsflächen sein. Das Paar der ersten Reflexionsflächen befindet sich auf dem reflektierenden Vorsprung, das Paar der zweiten Reflexionsflächen befindet sich auf dem Lichtleiter. Bei der bevorzugten Konstruktion, bei der die Summe der Höhen der Reflexionsflächen gleich der Höhe der Kollimationsfläche ist, bestimmt diese Summe der Höhen auch die Gesamthöhe des optischen Elements.

Die optische Achse des Lichtleiters verläuft durch den Körper des Lichtleiters und schneidet die Austrittsfläche und die Kollimationsfläche. Vorteilhafterweise kann die optische Achse des Lichtleiters zwischen dem Paar der zweiten Reflexionsflächen verlaufen. Das bedeutet, dass das Paar der zweiten Reflexionsflächen vorzugsweise gegenüber der Austrittsfläche angeordnet sein kann.

Bei der Konstruktion des Lichtleiters können die oberen, seitlichen und unteren Wände des Lichtleiters vorzugsweise glatt sein. Vorzugsweise wird dadurch die zusätzliche, unerwünschte Streuung von Lichtstrahlen und der damit verbundene Verlust an Intensität und Homogenität der Strahlung reduziert. Glatte Wände enthalten keine Auskopplungselemente, so dass das Licht durch den Lichtleiter entlang der optischen Achse des Lichtleiters zur Austrittsfläche geleitet wird und der größte Teil des Lichts den Lichtleiter durch die Austrittsfläche verlässt. Das optische Element strahlt also das Licht in eine Richtung aus.

Das optische Element für einen Fahrzeugscheinwerfer kann vorteilhafterweise so konstruiert sein, dass es alle vorgenannten Bauelemente mindestens zweimal umfasst: es kann mindestens einen zweiten Lichtleiter und mindestens einen zweiten reflektierenden Vorsprung umfassen, der fest mit dem zweiten Lichtleiter verbunden ist, und ferner eine zweite Eintrittsfläche für den Lichteintritt von einer zweiten Lichtquelle und eine zweite Austrittsfläche für den Lichtaustritt aus dem optischen Element umfassen. In diesem Fall befindet sich die zweite Eintrittsfläche auf dem zweiten reflektierenden Vorsprung und die zweite Austrittsfläche auf dem zweiten Lichtleiter, die zweite optische Achse des zweiten Lichtleiters schneidet die zweite Austrittsfläche. Das optische Element kann eine zweite Kollimationsfläche zum Lenken des in das optische Element eintretenden Lichts umfassen, wobei sich die zweite Kollimationsfläche auf dem zweiten reflektierenden Vorsprung befindet und eine zweite optische Achse des zweiten Lichtleiters die zweite Kollimationsfläche schneidet. Das optische Element kann ferner ein zweites Paar der ersten Reflexionsflächen und ein zweites Paar der zweiten Reflexionsflächen umfassen, wobei sich das zweite Paar der ersten Reflexionsflächen auf dem zweiten reflektierenden Vorsprung und das zweite Paar der zweiten Reflexionsflächen auf dem zweiten Lichtleiter befindet. Die zweite Eintrittsfläche für den Lichteintritt befindet sich zwischen der zweiten Kollimationsfläche und dem zweiten Paar der ersten Reflexionsflächen.

Die zweite Kollimationsfläche ist so beschaffen, dass sie einen Teil des Lichts entlang der zweiten optischen Achse des zweiten Lichtleiters direkt auf die zweite Austrittsfläche und einen Teil des Lichts entlang der zweiten optischen Achse des zweiten Lichtleiters auf das zweite Paar der ersten Reflexionsflächen reflektiert. Jede zweite Reflexionsfläche aus dem zweiten Paar der ersten Reflexionsflächen ist zur Reflexion des Lichts von der zweiten Kollimationsfläche auf eine Reflexionsfläche aus dem zweiten Paar der zweiten Reflexionsflächen und jede aus dem zweiten Paar der zweiten Reflexionsflächen ist zur Reflexion des Lichts von der jeweiligen ersten Reflexionsfläche auf die zweite Austrittsfläche beschaffen.

Der zweite Lichtleiter und der zweite reflektierende Vorsprung können vorteilhafterweise aus demselben Materialblock wie der erste Lichtleiter und der erste reflektierende Vorsprung hergestellt werden.

Das optische Element kann vorteilhafterweise aus zwei oder mehr Paaren aus Lichtleiter und reflektierendem Vorsprung konstruiert werden. Jedes Paar aus Lichtleiter und Vorsprung kann die oben beschriebenen vorteilhaften Merkmale aufweisen. Die Austrittsflächen aller Lichtleiter zeigen vorzugsweise in eine Richtung und bilden eine einheitliche gemeinsame Austrittswand. Die Eintrittsflächen dieser Paare liegen vorzugsweise in einer Ebene.

Bei dieser Konstruktion bilden die Seitenwände der äußerem Lichtleiter die äußeren Wände des gesamten optischen Elements. Die einzelnen Lichtleiter sind vorzugsweise aus einem einzigen Stück Material gefertigt, es gibt also keine Grenze zwischen ihnen. Das gesamte optische Element aus den einzelnen Paaren von Lichtleiter und reflektierendem Vorsprung wird dann vorzugsweise aus einem einzigen Materialblock geformt.

Bei dieser vorteilhaften Konstruktion wird das Licht aus mehreren Lichtquellen von einem einzigen Stück Material verarbeitet. Wesentlich werden dadurch der konstruktive und finanzielle Aufwand für die Herstellung des gesamten Scheinwerfers reduziert. Der Einbau eines solchen kompakten optischen Elements ist einfacher und ermöglicht eine weitere Kostensenkung. Bei dieser Konstruktion bleibt die Intensität der von der Quelle ausgehenden Lichtstrahlung erhalten, und durch die Nutzung der gemeinsamen Austrittsfläche wird eine gleichmäßige Beleuchtung erreicht.

Die oben genannten vorteilhaften Konstruktionsmerkmale - die viereckige Form der Reflexionsflächen, die Breite des optischen Elements, die der Summe der Breiten der Kollimationsfläche und des Paares der zweiten Reflexionsflächen entspricht, die Höhe des optischen Elements, die der Höhe der Kollimationsfläche entspricht - tragen zur Kompaktheit des optischen Elements insgesamt bei. Dadurch wird der Fertigungs- und Montageaufwand für die Konstruktion des optischen Elements und dessen Einbau in das Fahrzeug erheblich reduziert. Durch die Kombination der Konstruktionsmerkmale mit dem Einsatz der Totalreflexion wird eine höhere Intensität der Lichtstrahlung beibehalten und die Gleichmäßigkeit der resultierenden Lichtstrahlung erhöht.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine schematische Darstellung eines optischen Elements für einen Fahrzeugscheinwerfer, wobei die Fig. 1a die Flächen und die Fig. 1b die Lichtstrahlen zeigt
Fig. 2 eine schematische Darstellung des optischen Elements für einen Fahrzeugscheinwerfer in der Draufsicht mit markierten Reflexionsflächen
Fig. 3 eine schematische Darstellung des optischen Elements für einen Fahrzeugscheinwerfer in Ansicht von unten mit markierten Reflexionsflächen
Fig. 4 eine schematische Darstellung des optischen Elements für einen Fahrzeugscheinwerfer in Ansicht direkt aus dem Profil mit markierten Reflexionsflächen
Fig. 5 eine schematische Darstellung des optischen Elements für einen Fahrzeugscheinwerfer in Ansicht direkt aus dem Profil mit markierten versteckten Kanten und Lichtstrahlen
Fig. 6 eine schematische Darstellung des optischen Elements für einen Fahrzeugscheinwerfer in Ansicht von unten mit markierten Flächen
Fig. 7 eine schematische Darstellung des optischen Elements für einen Fahrzeugscheinwerfer mit angedeuteter Unterteilung in einen Lichtleiter und einen reflektierenden Vorsprung
Fig. 8 eine Darstellung des Diagramms der Homogenität der Beleuchtung der Austrittsfläche eines aus dem Stand der Technik bekannten Scheinwerfers
Fig. 9 eine Darstellung des Diagramms der Homogenität der Beleuchtung der Austrittsfläche bei der vorliegenden Erfindung.

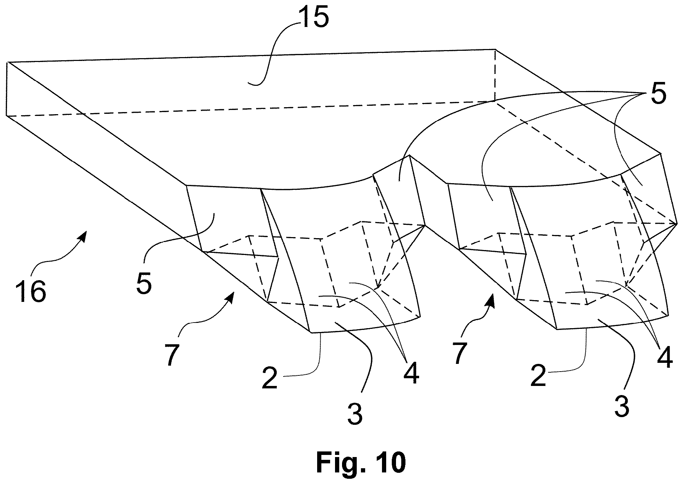

Fig. 10 eine Darstellung des optischen Elements für einen Fahrzeugscheinwerfer mit einem zweiten Lichtleiter und einem zweiten reflektierenden Vorsprung

### Ausführungsbeispiele der Erfindung

Die Erfindung wird anhand von Ausführungsbeispielen unter Bezugnahme auf die entsprechenden Zeichnungen näher erläutert.

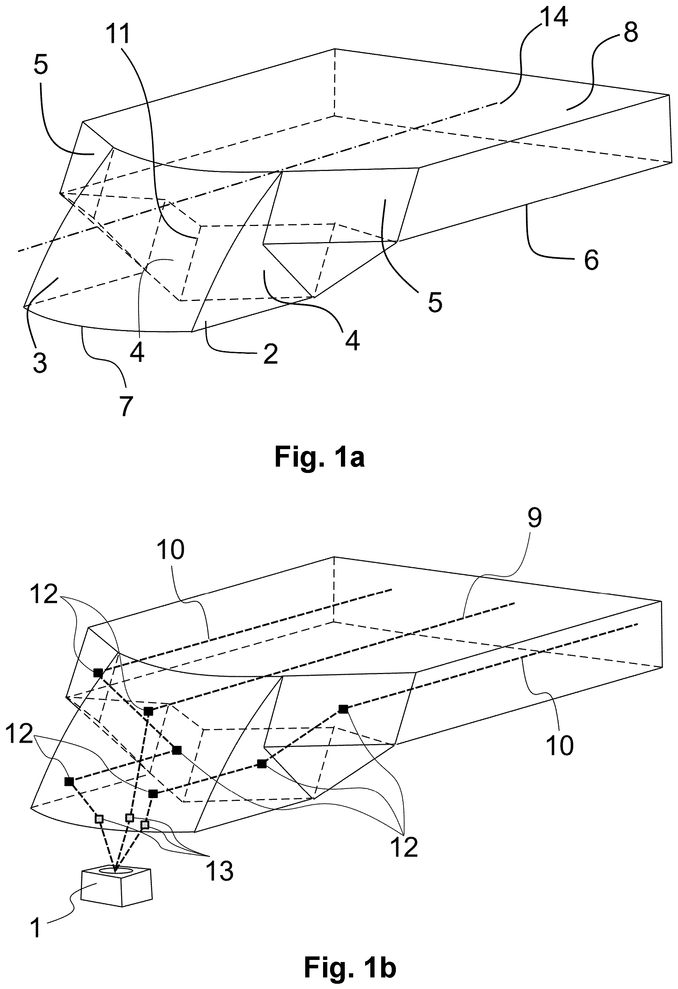

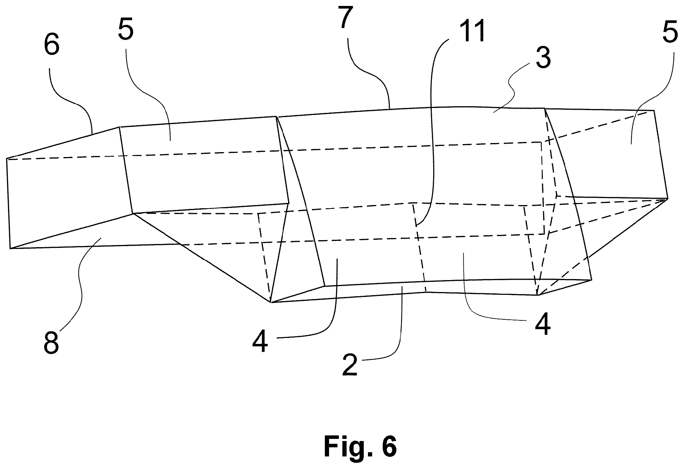

Das erste Ausführungsbeispiel der Erfindung - des optischen Elements für einen Fahrzeugscheinwerfer - ist in den Figuren 1 bis 7 dargestellt. Das optische Element für einen Fahrzeugscheinwerfer umfasst einen Lichtleiter 6 und einen reflektierenden Vorsprung 7. Im ersten Ausführungsbeispiel befindet sich auf dem reflektierenden Vorsprung 7 eine Eintrittsfläche 2 für den Lichteintritt, eine Kollimationsfläche 3 zum Lenken der Lichtstrahlen und ein Paar der ersten Reflexionsflächen 4 zur Reflexion des Lichts von der Kollimationsfläche 3 auf ein Paar der zweiten Reflexionsflächen 5. Im ersten Ausführungsbeispiel befindet sich auf dem Lichtleiter 6 eine Austrittsfläche 8 zum Lichtaustritt und das Paar der zweiten Reflexionsflächen 5 zur Reflexion von Licht aus dem Paar der ersten Reflexionsflächen 4 auf die Austrittsfläche 8.

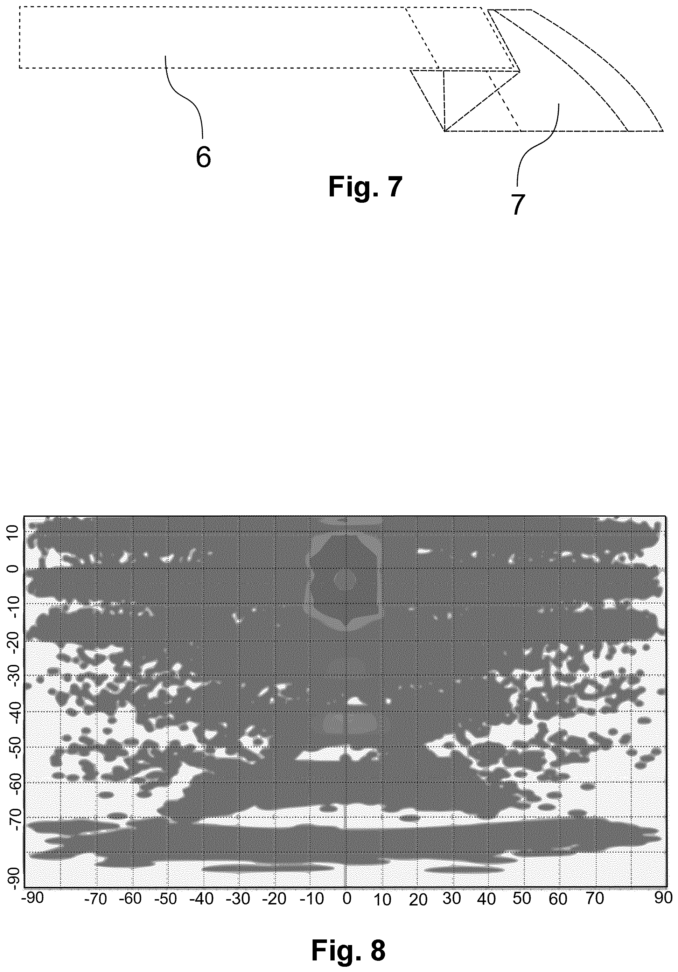

Die optische Achse 14 des Lichtleiters 6 schneidet die Austrittsfläche 8, verläuft zwischen dem Paar der zweiten Reflexionsflächen 5 und schneidet die Kollimationsfläche 3. Die Austrittsfläche 8 und die Kollimationsfläche 3 sind im ersten Ausführungsbeispiel einander gegenüberliegend angeordnet. Die Eintrittsfläche 2 verläuft im ersten Ausführungsbeispiel entlang der optischen Achse 14 des Lichtleiters 6 und befindet sich zwischen der Kollimationsfläche 3 und dem Paar der ersten Reflexionsflächen 4. Im ersten Ausführungsbeispiel laufen die Lichtstrahlen von der Lichtquelle 1 die Eintrittsfläche 2 an der Eintrittsstelle 13 in das optische Element durch, wo sie in Richtung zur Kollimationsfläche 3 gebrochen werden. Von der Kollimationsfläche 3 wird ein Teil der Strahlen auf die Austrittsfläche 8 reflektiert, ein Teil der Strahlen wird auf das Paar der ersten Reflexionsflächen 4 reflektiert. Von dem Paar der ersten Reflexionsflächen 4 werden die Lichtstrahlen auf das Paar der zweiten Reflexionsflächen 5 und von dort in Richtung auf die Austrittsfläche 8 reflektiert. Der Lichtleiter 6 und der reflektierende Vorsprung 7 sind aus einem einzigen Stück Material gefertigt. Eine schematische Darstellung der beiden Teile des optischen Elements - des Lichtleiters 6 und des reflektierenden Vorsprungs 7 - ist in der Fig. 7 zu sehen.

Im ersten Ausführungsbeispiel hat der Lichtleiter 6 die Form eines in horizontaler Richtung erweiterten Quaders mit einer abgeschrägten Wand. In der Seitenansicht hat das optische Element die Form eines rechteckigen Trapezes und der reflektierende Vorsprung 7 ist im ersten Ausführungsbeispiel teilweise an der abgeschrägten Wand des Lichtleiters 6 und teilweise an der Unterfläche des Lichtleiters 6 befestigt. Bei dieser Konstruktion befindet sich die Eintrittsfläche 2 an der Unterseite des reflektierenden Vorsprungs 7 und liegt parallel zur optischen Achse 14 des Lichtleiters 6. Die Austrittsfläche 8 befindet sich am Lichtleiter 6 auf der dem reflektierenden Vorsprung 7 gegenüberliegenden Seite. Die Ebenen, in denen sich die Eintrittsfläche 2 und die Austrittsfläche 8 befinden, stehen senkrecht zueinander. Im ersten Ausführungsbeispiel ist der Lichtleiter 6 aus gehärtetem Kunststoff gefertigt. Die Austrittsfläche 8 ist Teil des Körpers des Lichtleiters 6 und definiert die äußere Wand, die der abgeschrägten Wand gegenüberliegt.

Im reflektierenden Vorsprung 7 befinden sich im ersten Ausführungsbeispiel die Kollimationsfläche 3 und das Paar der ersten Reflexionsflächen 4, und der reflektierende Vorsprung 7 ist aus gehärtetem Kunststoff gefertigt. Die Eintrittsfläche 2 ist Teil des Körpers des reflektierenden Vorsprungs 7 und bildet dessen Unterfläche. Die Lichtstrahlen werden in Richtung der Kollimationsfläche 3 auf der Eintrittsfläche 2 gebrochen. Die Eintrittsfläche 2 und die Kollimationsfläche 3 schließen einen Winkel von 60° zueinander im ersten Ausführungsbeispiel.

Im ersten Ausführungsbeispiel reflektiert die obere Hälfte der Kollimationsfläche 3 einen Teil der Lichtstrahlen direkt in den Lichtleiter 6 auf die Austrittsfläche 8 und die untere Hälfte der Kollimationsfläche 3 reflektiert einen Teil der Lichtstrahlen auf das erste Paar von Reflexionsflächen 4. Die Kollimationsfläche 3 befindet sich im ersten Ausführungsbeispiel auf dem reflektierenden Vorsprung 7 an der der gemeinsamen Wand mit dem Lichtleiter 6 gegenüberliegenden Wand und hat die Form eines Paraboloids. In der Seitenansicht auf das optische Element hat die Kollimationsfläche 3 die Form einer Parabel. Die untere Hälfte der Kollimationsfläche 3 befindet sich unterhalb der Ebene der Unterseite des Lichtleiters 6. Die Kollimationsfläche 3 ist im ersten Ausführungsbeispiel ein Bestandteil vom Körper des reflektierenden Vorsprungs 7 und definiert dessen äußere Wand.

Das optische Element umfasst das Paar der ersten Reflexionsflächen 4 und das Paar der zweiten Reflexionsflächen 5. Im ersten Ausführungsbeispiel befindet sich das Paar der ersten Reflexionsflächen 4 auf dem reflektierenden Vorsprung 7. In einer Seitenansicht auf das optische Element schließt jede Reflexionsfläche des Paares der ersten Reflexionsflächen 4 einen Winkel von 120° mit der Eintrittsfläche 2 an der Unterseite des reflektierenden Vorsprungs 7 ein. Die Eintrittsfläche 2 für den Lichteintritt befindet sich im ersten Ausführungsbeispiel also zwischen dem Paar der ersten Reflexionsflächen 4 und der unteren Hälfte der Kollimationsfläche 3.

Im ersten Ausführungsbeispiel haben die Reflexionsflächen des Paares der ersten Reflexionsflächen 4 eine gemeinsame Kante 11. In der Draufsicht auf das optische Element bildet das optische Element ein Dreieck, dessen Spitze auf die Kollimationsfläche 3 gerichtet ist. Die individuellen Kanten liegen der gemeinsamen Kante 11 gegenüber und sind den Seitenwänden des Lichtleiters 6 zugewandt. In der Seitenansicht auf das optische Element ist die gemeinsame Kante 11 des Paars der ersten Reflexionsflächen 4 weiter von der Austrittsfläche 8 entfernt als die individuellen Kanten der Reflexionsflächen im Paar der ersten Reflexionsflächen 4. Die Höhe der Reflexionsflächen im Paar der ersten Reflexionsflächen 4 wird in vertikaler Richtung senkrecht zur optischen Achse 14 des Lichtleiters 6 gemessen.

Das Paar der zweiten Reflexionsflächen 5 befindet sich im ersten Ausführungsbeispiel an der abgeschrägten Wand des Lichtleiters 6. Auf jeder Seite der Kollimationsfläche 3 befindet sich eine zweite Reflexionsfläche 5. Die optische Achse 14 des Lichtleiters 6 verläuft zwischen dem Paar der zweiten Reflexionsflächen 5. Eine Seite jeder Reflexionsfläche im Paar der zweiten Reflexionsflächen 5 liegt an der oberen Hälfte der Kollimationsfläche 3 an. Die gegenüberliegende Seite jeder Reflexionsfläche im Paar der zweiten Reflexionsflächen 5 ist gleichzeitig die äußerste Kante des Lichtleiters 6. Die Ober- und Unterseite der Reflexionsflächen ist im ersten Ausführungsbeispiel gleichzeitig auch die Ober- und Unterkante des Lichtleiters 6. Die Höhe der Reflexionsflächen im Paar der zweiten Reflexionsflächen 5 wird in senkrechter Richtung senkrecht zur optischen Achse 14 des Lichtleiters 6 gemessen.

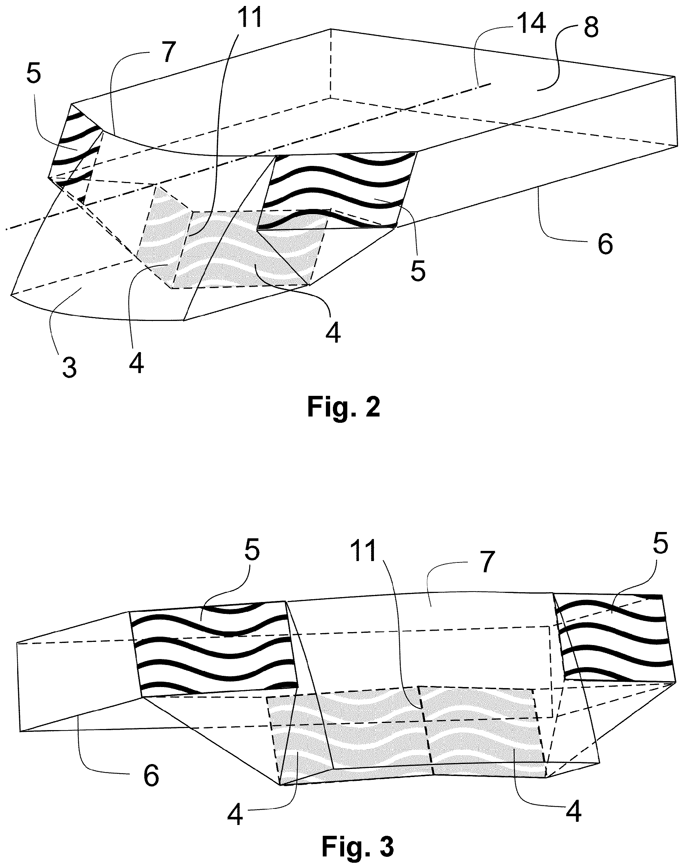

Bei der Konstruktion nach dem ersten Ausführungsbeispiel definiert die Summe der Breite der Kollimationsfläche 3 und der Breiten der beiden Reflexionsflächen im Paar der zweiten Reflexionsflächen 5 die Breite des Lichtleiters 6 und damit auch die Breite des gesamten optischen Elements, gemessen in horizontaler Richtung senkrecht zur optischen Achse 14 des Lichtleiters 6. Die Höhe des optischen Elements 6 wird im ersten Ausführungsbeispiel durch die Summe der Höhe einer Reflexionsfläche aus dem ersten Paar der Reflexionsflächen 4 und der Höhe einer Reflexionsfläche aus dem Paar der zweiten Reflexionsflächen 5 bestimmt. Die Höhe des optischen Elements 6 ist gleich der Höhe der Kollimationsfläche 3, gemessen in senkrechter Richtung senkrecht zur optischen Achse 14 des Lichtleiters 6. Die Darstellung der Paare der Reflexionsflächen ist in den Fig. 2-4 schematisch dargestellt.

Die Reflexionsflächen haben im ersten Ausführungsbeispiel der Erfindung die Form eines Vierecks und sind flach. Der Inhalt der einzelnen Reflexionsflächen im Paar der ersten Reflexionsflächen 4 ist derselbe wie der Inhalt der einzelnen Reflexionsflächen im Paar der zweiten Reflexionsflächen 5. Im ersten Ausführungsbeispiel sind die Reflexionsflächen ein Bestandteil des Körpers des optischen Elements und bestehen daher aus demselben Material. Beim Paar der ersten Reflexionsflächen 4 sind sie ein Bestandteil des reflektierenden Vorsprungs 7, beim Paar der zweiten Reflexionsflächen 5 sind sie ein Bestandteil des Lichtleiters 6.

Im ersten Ausführungsbeispiel sind alle lichtreflektierenden Flächen - die Kollimationsfläche 3, das Paar der ersten Reflexionsflächen 4, das Paar der zweiten Reflexionsflächen 5 - zur Reflexion der Lichtstrahlen mittels einer Totalreflexion 12 beschaffen. Praktisch alle auf die Kollimationsfläche 3 auftreffenden Lichtstrahlen werden in einen Hauptstrahl 9 des Lichts und Nebenstrahlen 10 des Lichts aufgeteilt und entlang der optischen Achse 14 des Lichtleiters 6 geführt. Praktisch alle Lichtstrahlen werden dann von dem Paar der ersten Reflexionsflächen 4 auf das Paar der zweiten Reflexionsflächen 5 reflektiert und praktisch alle Lichtstrahlen werden von dem Paar der zweiten Reflexionsflächen 5 zur Austrittsfläche 8 reflektiert.

Im ersten Ausführungsbeispiel ist die Lichtquelle 1 eine Leuchtdiode (LED). Die Lichtstrahlen im ersten Ausführungsbeispiel treten durch die Eintrittsfläche 2 am reflektierenden Vorsprung 7 in das optische Element ein. An der Eintrittsfläche 2 werden die Lichtstrahlen an der Eintrittsstelle 13 in das optische Element in Richtung zur Kollimationsfläche 3 gebrochen und von dort entlang der optischen Achse 14 des Lichtleiters 6 gelenkt. Bei der Reflexion der Lichtstrahlen durch die obere Hälfte der Kollimationsfläche 3 entsteht ein Hauptstrahl 9 des Lichts, der durch die Totalreflexion 12 direkt auf die Austrittsfläche 8 gerichtet wird. Der Hauptstrahl 9 des Lichts wird praktisch in der Mitte der Austrittsfläche 8 ausgestrahlt. Bei der Reflexion der Lichtstrahlen durch die untere Hälfte der Kollimationsfläche 3 entstehen zwei seitliche Nebenstrahlen 10 des Lichts, die durch Totalreflexion 12 auf je eine Reflexionsfläche aus dem Paar der ersten Reflexionsflächen 4 gerichtet werden. An dem Paar der ersten Reflexionsflächen 4 werden die Lichtstrahlen durch Totalreflexion 12 auf das Paar der zweiten Reflexionsflächen 5 gelenkt. Jede Reflexionsfläche im Paar der zweiten Reflexionsflächen 5 lenkt durch die Totalreflexion 12 die Lichtstrahlen zur Austrittsfläche 8.

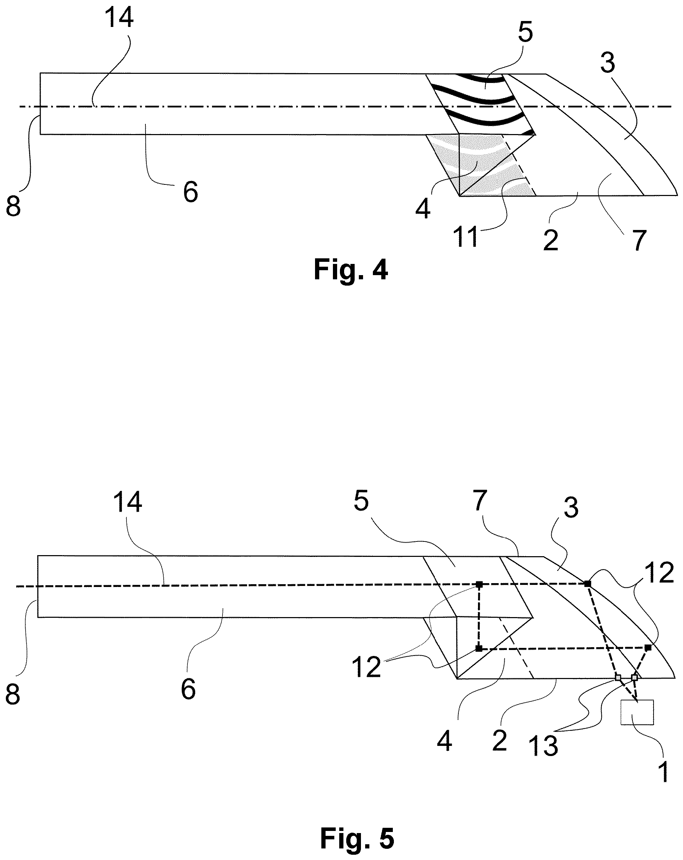

Im ersten Ausführungsbeispiel der Erfindung ist das Paar der zweiten Reflexionsflächen 5 links und rechts neben der Kollimationsfläche 3 angeordnet. Aufgrund dieser Konstruktion werden die Nebenstrahlen 10 des Lichts aus dem Paar der zweiten Reflexionsflächen 5 auf die Seitenteile der Austrittsfläche 8 links und rechts neben dem Hauptstrahl 9 des Lichts gerichtet. Die Austrittsfläche 8 wird über ihre gesamte Fläche gleichmäßig beleuchtet und die resultierende Lichtstrahlung ist gleichmäßig. Eine schematische Darstellung des Verlaufs der Lichtstrahlen durch das optische Element ist in der Fig. 1 b und Fig. 5 zu sehen.

Im ersten Ausführungsbeispiel sind der reflektierende Vorsprung 7 sowie der Lichtleiter 6 aus einem gehärteten Kunststoff aus einem einzigen Materialblock gefertigt. Die Wände des Lichtleiters 6 sind im ersten Ausführungsbeispiel glatt, die Lichtstrahlen werden durch den Körper des Lichtleiters 6 ohne Unterbrechung oder Streuung zur Austrittsfläche 8 geführt.

Im zweiten Ausführungsbeispiel werden für den Aufbau des optischen Elements zwei Paare vom Lichtleiter 6 und vom reflektierenden Vorsprung 7 verwendet, also zwei einzelne optische Teile, die zu einem größeren optischen Element verbunden sind. Die einzelnen optischen Teile werden miteinander verbunden und nebeneinander angeordnet. Die einzelnen optischen Teile weisen die gleichen Konstruktionsmerkmale und vorteilhaften Elemente auf wie in dem Fall, in dem das optische Element nur ein Paar vom Lichtleiter 6 und vom reflektierenden Vorsprung 7 umfasst.

In dieser Ausführung sind alle Eintrittsflächen 2 in einer Ebene ausgerichtet. Die Kollimationsfläche 3 schließt einen Winkel von 60° zur Eintrittsfläche 2 ein. In dieser Ausführung schließen alle Kollimationsflächen 3 den gleichen Winkel mit der jeweiligen Eintrittsfläche 2. An jedem reflektierenden Vorsprung 7 befindet sich ein Paar der ersten Reflexionsflächen 4 und an jedem Lichtleiter 6 ein Paar der zweiten Reflexionsflächen 5. Die optische Achse 14 jedes Lichtleiters 6 schneidet die Austrittsfläche 8 und die Kollimationsfläche 3 des jeweiligen optischen Elements.

Die einzelnen Paare des Lichtleiters 6 und des reflektierenden Vorsprungs 7 sind in dem optischen Element nebeneinander angeordnet und durch die Seitenwände der Lichtleiter 7 verbunden. Die Seitenwände der einzelnen äußeren optischen Elemente bilden somit die Seitenwände des gesamten optischen Elements.

Vorzugsweise gibt es keine bauliche Trennung oder Unterteilung zwischen den einzelnen Lichtleitern 6 und die einzelnen Lichtleiter 6 bilden einen gemeinsamen Lichtleiter 16. Auf der Seite des Lichteintritts in die einzelnen optischen Elemente befinden sich die Kollimationsflächen 3, auf der gegenüberliegenden Seite befinden sich die einzelnen Austrittsflächen 8, die alle in die gleiche Richtung weisen. Aufgrund der fehlenden baulichen Unterteilung der einzelnen Lichtleiter 6 sind die einzelnen Austrittsflächen 8 nicht getrennt und bilden eine gemeinsame Austrittsfläche 15. Das gesamte optische Element, das aus einzelnen optischen Teilen besteht, wird somit vorzugsweise aus einem einzigen Materialblock hergestellt.

Das Licht aus den einzelnen Lichtquellen 1 läuft durch die einzelnen optischen Teile wie bei einer Konstruktion mit einem einzigen optischen Teil durch.

Das Licht tritt in den reflektierenden Vorsprung 7 durch die Eintrittsfläche 2 ein, wo es in Richtung zur Kollimationsfläche 3 bricht. Durch die Totalreflexion 12 wird es von der Kollimationsfläche 3 in Richtung der optischen Achse 14 des Lichtleiters 6 gerichtet. Ein Teil des Lichts wird direkt über die Austrittsfläche 8 ausgestrahlt - der Hauptstrahl 9 des Lichts. Ein Teil des Lichts wird auf das Paar der ersten Reflexionsflächen 4 gerichtet - der Nebenstahl 10 des Lichts. Auf das Paar der ersten Reflexionsflächen 4 wird es durch die Totalreflexion 12 auf das Paar der zweiten Reflexionsflächen 5 und von dort in Richtung auf die Austrittsfläche 8 gerichtet. Jedes Paar bestehend aus dem Lichtleiter 6 und dem reflektierenden Vorsprung 7 strahlt somit das Licht von seiner jeweiligen Lichtquelle 1 aus.

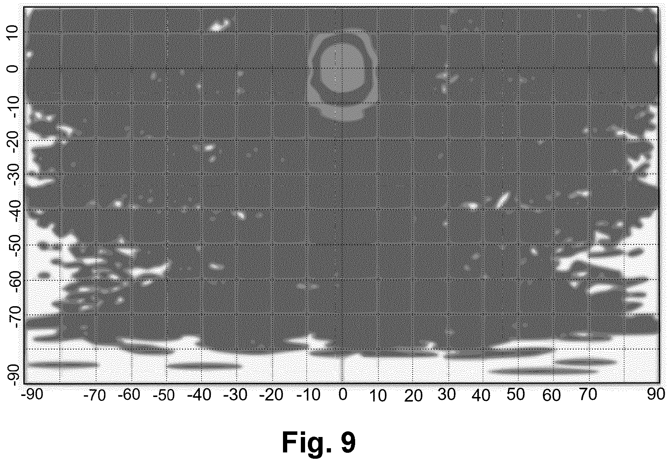

Aus dem Stand der Technik ist ein Fahrzeugscheinwerfer bekannt, der bei Einsatz einer einzigen Lichtquelle eine nicht sehr homogene Beleuchtung der Austrittsfläche erzeugt. Die maximale Intensität der Leuchtdichte der bekannten Lösung beträgt 10,247 cd, der maximale Lichtstrom 0,249 Im. Mit der vorliegenden Erfindung wird eine maximale Leuchtdichte von 20,299 cd und ein maximaler Lichtstrom von 0,409 Im erreicht. Die bekannte Lösung erreicht daher nur einen Wirkungsgrad von etwa 60 % im Vergleich zur vorliegenden Erfindung. Der Vergleich der Homogenität der Beleuchtung der Austrittsfläche ist in der Fig. 8 und Fig. 9 dargestellt.

Alternative Ausführung:
Die Alternativen, die sich auf einzelne Merkmale oder Bestandteile der Erfindung beziehen, können nach dem Ermessen des Fachmanns unabhängig voneinander verwendet oder miteinander kombiniert werden. Sofern für eine bestimmte alternative Ausführung nichts anderes angegeben ist, werden die anderen Merkmale dieser Ausführung wie beim ersten Ausführungsbeispiel umgesetzt.

In einer alternativen Ausführung sind an den Seitenwänden des reflektierenden Vorsprungs 7 zusätzliche Reflexionsflächen vorgesehen. Der Winkel zwischen der Kollimationsfläche 3 und der Eintrittsfläche 2 beträgt in einer alternativen Ausführung mehr als 1° und weniger als 60°. In einer anderen alternativen Ausführung beträgt der Winkel mehr als 60° und weniger als 179°.

Das Paar der ersten Reflexionsflächen 4 hat in einer alternativen Ausführung keine gemeinsame Kante 11. Die Paare der ersten Reflexionsflächen 4 haben einen Zwischenraum, der durch den Körper des reflektierenden Vorsprungs 7 gebildet wird. In einer anderen alternativen Ausführung hat das Paar der ersten Reflexionsflächen 4 eine gemeinsame Kante 11, deren Abstand von der Austrittsfläche 8 kürzer ist als der Abstand der individuellen Kanten der Reflexionsflächen aus dem Paar der ersten Reflexionsflächen 4. In einem weiteren Ausführungsbeispiel reicht die Unterseite der Reflexionsflächen nicht bis zur Unterkante des reflektierenden Vorsprungs 7. Der Winkel, den die Reflexionsflächen im Paar der ersten Reflexionsflächen 4 mit der Eintrittsfläche 2 einschließen, ist in einem anderen Ausführungsbeispiel kleiner als 120° und in einer anderen alternativen Ausführung größer als 120°.

Das Paar der zweiten Reflexionsflächen 5 in der alternativen Ausführung liegt nicht and der Kollimationsfläche 3 an - zwischen den Seitenwänden der Kollimationsfläche 3 und den Seitenwänden der Reflexionsflächen ist der Raum des Körpers des Lichtleiters 6. In einer anderen alternativen Ausführung reichen die äußeren Seiten der Reflexionsflächen im Paar der zweiten Reflexionsflächen 5 nicht bis zu den Kanten des Lichtleiters 6 und zwischen den Reflexionsflächen und den Wänden des Lichtleiters 6 befindet sich ein Raum. In einer weiteren alternativen Ausführung haben die Reflexionsflächen im Paar der zweiten Reflexionsflächen 5 eine gemeinsame Seite und in der Draufsicht auf das optische Element senkrecht auf die optische Achse 14 des Lichtleiters 6 bilden sie ein Dreieck, dessen Spitze auf den reflektierenden Vorsprung 7 gerichtet ist. In einer anderen alternativen Ausführung weist das Dreieck mit seiner Spitze in Richtung der Austrittsfläche 8.

In einer alternativen Ausführung der Erfindung ist mindestens eine Fläche der Reflexionsflächen - die Kollimationsfläche 3, das Paar der ersten Reflexionsflächen 4, das Paar der zweiten Reflexionsflächen 4 - durch Aufbringen einer dünnen Schicht aus metallischem Material auf die Substratfläche hergestellt. Die Substratfläche für die reflektierenden Platten ist direkt der Körper des optischen Elements. Das Metallmaterial ist eine dünne Silberschicht. In einer anderen alternativen Ausführung ist das Metallmaterial eine Aluminiumschicht, in einer weiteren Ausführung ist die Reflexionsfläche durch Aufbringen einer dünnen Chromschicht auf die Substratfläche hergestellt. Bei Einsatz eines Metallmaterials für die Konstruktion der Reflexionsflächen werden die Lichtstrahlen nach dem Prinzip der Reflexion an einem Spiegel reflektiert.

In einer alternativen Ausführung sind die Paare der Reflexionsflächen Parabolspiegel. In einer weiteren alternativen Ausführung haben die Reflexionsflächen die Form von flachen, geraden Spiegeln. In einer anderen Ausführung sind die Reflexionsflächen kreisförmig. Der Inhalt der einzelnen Reflexionsflächen im Paar der ersten Reflexionsflächen 4 unterscheidet sich von dem Inhalt der einzelnen Reflexionsflächen im Paar der zweiten Reflexionsflächen 5, wobei die Reflexionsflächen im Paar der zweiten Reflexionsflächen 5 um 1/3 mehr Inhalt haben.

Der Körper des Lichtleiters 6 hat, entlang der optischen Achse 14 des Lichtleiters 6 gesehen, in einer alternativen Ausführung die Form eines Kreises. In einer anderen alternativen Ausführung befinden sich im Körper des Lichtleiters 6 zusätzliche Reflexionsflächen.

In einer alternativen Ausführung ist die Lichtquelle 1 eine Halogenbirne. In einer anderen alternativen Ausführung ist die Lichtquelle 1 eine Xenon-Bogenlampe.

In einer alternativen Ausführung zum zweiten Ausführungsbeispiel werden für die Konstruktion des optischen Elements mindestens drei Paare aus Lichtleiter 6 und reflektierendem Vorsprung 7 verwendet. Der Winkel zwischen der Kollimationsfläche 3 und der Eintrittsfläche 2 beträgt mehr als 1° und weniger als 60°. In weiteren alternativen Ausführungen beträgt dieser Winkel mehr als 60° und weniger als 179°.

In weiteren alternativen Ausführungen zum zweiten Ausführungsbeispiel erhöht sich die Anzahl der Paare aus Lichtleiter 6 und reflektierendem Vorsprung 7.

### Bezugszeichenliste

1 - Lichtquelle
2 - Eintrittsfläche
3 - Kollimationsfläche
4 - erste Reflexionsfläche
5 - zweite Reflexionsfläche
6 - Lichtleiter
7 - reflektierender Vorsprung
8 - Austrittsfläche
9 - Hauptstrahl des Lichts
10 - Nebenstrahlen des Lichts
11 - gemeinsame Kante
12 - Totalreflexion
13 - Eintrittsstellen in das optische Element
14 - optische Achse des Lichtleiters
15 - gemeinsame Austrittsfläche
16 - gemeinsamer Lichtleiter

## Patentansprüche

1. Optisches Element für einen Fahrzeugscheinwerfer, das einen Lichtleiter (6) und einen reflektierenden Vorsprung (7) enthält, der starr am Lichtleiter (6) befestigt ist,
• wobei das optische Element ferner eine Eintrittsfläche (2) für den Lichteintritt von der Lichtquelle (1) und eine Austrittsfläche (8) für den Lichtaustritt aus dem optischen Element umfasst,
• wobei sich die Eintrittsfläche (2) auf dem reflektierenden Vorsprung (7) und die Austrittsfläche (8) auf dem Lichtleiter (6) befindet,
• wobei die optische Achse (14) des Lichtleiters (6) die Austrittsfläche (8) schneidet,
• wobei das optische Element ferner eine Kollimationsfläche (3) zum Lenken des in das optische Element eintretenden Lichts umfasst,
**dadurch gekennzeichnet, dass**
• sich die Kollimationsfläche (3) auf dem reflektierenden Vorsprung (7) befindet und die optische Achse (14) des Lichtleiters (6) die Kollimationsfläche (3) schneidet,
• wobei das optische Element ferner ein Paar der ersten Reflexionsflächen (4) und ein Paar der zweiten Reflexionsflächen (5) umfasst,
• wobei sich ein Paar der ersten Reflexionsflächen (4) an dem reflektierenden Vorsprung (7) und ein Paar der zweiten Reflexionsflächen (5) an dem Lichtleiter (6) befindet,
• wobei sich die Eintrittsfläche (2) für den Lichteintritt zwischen der Kollimationsfläche (3) und dem Paar der ersten Reflexionsflächen (4) befindet,
• wobei die Kollimationsfläche (3) zur Reflexion eines Teils des Lichts entlang der optischen Achse (14) des Lichtleiters (6) direkt auf die Austrittsfläche (8) und zur Reflexion eines Teils des Lichts entlang der optischen Achse (14) des Lichtleiters (6) auf das Paar der ersten Reflexionsflächen beschaffen ist,
• wobei jede Reflexionsfläche des Paars der ersten Reflexionsflächen (4) zur Reflexion des Lichts von der Kollimationsfläche (3) zu einer Reflexionsfläche aus dem Paar der zweiten Reflexionsflächen (5) beschaffen ist und jedes von dem Paar der zweiten Reflexionsflächen (5) zur Reflexion des Lichts von der jeweiligen ersten Reflexionsfläche (4) auf die Austrittsfläche (8) beschaffen ist,
• wobei der Lichtleiter (6) und der reflektierende Vorsprung (7) aus einem einzigen Materialblock gefertigt sind.

2. Optisches Element für einen Fahrzeugscheinwerfer nach Anspruch 1, **dadurch gekennzeichnet, dass** die Reflexionsflächen im Paar der ersten Reflexionsflächen (4) mindestens eine gemeinsame Kante aufweisen und jede Reflexionsfläche im Paar der ersten Reflexionsflächen (4) mindestens eine individuelle Seitenkante gegenüberliegend der gemeinsamen Kante aufweist, wobei der Abstand der gemeinsamen Kante des Paares der ersten Reflexionsflächen (4) von der Austrittsfläche (8), gemessen in Richtung entlang der optischen Achse (14) des Lichtleiters (6), größer ist als der Abstand der individuellen Seitenkanten der ersten Reflexionsflächen (4) von der Austrittsfläche (8), gemessen in Richtung entlang der optischen Achse (14) des Lichtleiters (6).

3. Optisches Element für einen Fahrzeugscheinwerfer nach einem der vorhergehenden Ansprüche, **dadurch gekennzeichnet, dass** sich die Reflexionsflächen im Paar der zweiten Reflexionsflächen (5) neben der Kollimationsfläche (3) auf dem Lichtleiter (6) auf einer der Austrittsfläche (8) gegenüberliegenden Fläche befinden, wobei sich auf jeder Seite der Kollimationsfläche (3) eine des Paares der zweiten Reflexionsflächen (5) befindet.

4. Optisches Element für einen Fahrzeugscheinwerfer nach einem der vorhergehenden Ansprüche, **dadurch gekennzeichnet, dass** die Kollimationsfläche (3), das Paar der ersten Reflexionsflächen (4) und das Paar der zweiten Reflexionsflächen (5) zur Reflexion des Lichts durch Totalreflexion beschaffen sind.

5. Optisches Element für einen Fahrzeugscheinwerfer nach einem der vorhergehenden Ansprüche, **dadurch gekennzeichnet, dass** jede Fläche des Paares der ersten Reflexionsflächen (4) und des Paares der zweiten Reflexionsflächen (5) die Form eines Vierecks hat, wobei der Körper des Lichtleiters (6) bei Betrachtung entlang der optischen Achse (14) des Lichtleiters (6) die Form eines Vierecks hat.

6. Optisches Element für einen Fahrzeugscheinwerfer nach einem der vorhergehenden Ansprüche, **dadurch gekennzeichnet, dass** die Breite des Lichtleiters (6) mit der Summe der Breite des Paares der zweiten Reflexionsflächen und der Breite der Kollimationsfläche (3) identisch ist.

7. Optisches Element für einen Fahrzeugscheinwerfer nach einem der vorhergehenden Ansprüche, **dadurch gekennzeichnet, dass** die senkrecht zur optischen Achse (14) des Lichtleiters (6) in vertikaler Richtung gemessene Höhe des Lichtleiters (6) gleich der Höhe einer Reflexionsfläche des Paares der zweiten Reflexionsflächen (5) ist.

8. Optisches Element für einen Fahrzeugscheinwerfer nach einem der vorhergehenden Ansprüche, **dadurch gekennzeichnet, dass** die Höhe der Kollimationsfläche (3) gleich der Summe der Höhe einer Reflexionsfläche des Paares der ersten Reflexionsflächen (4) und der Höhe einer Reflexionsfläche des Paares der zweiten Reflexionsflächen (5) ist.

9. Optisches Element für einen Fahrzeugscheinwerfer nach einem der vorhergehenden Ansprüche, **dadurch gekennzeichnet, dass** sich die optische Achse (14) des Lichtleiters (6) zwischen den Reflexionsflächen des Paares der zweiten Reflexionsflächen (5) befindet.

10. Optisches Element für einen Fahrzeugscheinwerfer nach einem der vorhergehenden Ansprüche, **dadurch gekennzeichnet, dass** die Eintrittsfläche (2) entlang der optischen Achse (14) des Lichtleiters (6) verläuft.

11. Optisches Element für einen Fahrzeugscheinwerfer nach einem der vorhergehenden Ansprüche, **dadurch gekennzeichnet, dass** die oberen, unteren und seitlichen Wände des Lichtleiters (6) glatt sind.

12. Optisches Element für einen Fahrzeugscheinwerfer nach einem der vorhergehenden Ansprüche, **dadurch gekennzeichnet, dass**
• es einen zweiten Lichtleiter (6) und einen zweiten reflektierenden Vorsprung (7) enthält, der fest mit dem zweiten Lichtleiter (6) verbunden ist,
• wobei das optische Element ferner eine zweite Eintrittsfläche (2) für den Lichteintritt von der zweiten Lichtquelle (1) und eine zweite Austrittsfläche (8) für den Lichtaustritt aus dem optischen Element enthält,
• wobei sich die zweite Eintrittsfläche (2) auf dem zweiten reflektierenden Vorsprung (7) und die zweite Austrittsfläche (8) auf dem zweiten Lichtleiter (6) befindet,
• wobei die zweite optische Achse (14) des zweiten Lichtleiters (6) die zweite Austrittsfläche (8) schneidet,
• wobei das optische Element ferner eine zweite Kollimationsfläche (3) zum Lenken des in das optische Element eintretenden Lichts umfasst,
• wobei sich die zweite Kollimationsfläche (3) auf dem zweiten reflektierenden Vorsprung (7) befindet und die zweite optische Achse (14) des zweiten Lichtleiters (6) die zweite Kollimationsfläche (3) schneidet,
• wobei das optische Element ferner ein zweites Paar der ersten Reflexionsflächen (4) und ein zweites Paar der zweiten Reflexionsflächen (5) enthält,
• wobei sich das zweite Paar der ersten Reflexionsflächen (4) an dem zweiten reflektierenden Vorsprung (7) und das zweite Paar der zweiten Reflexionsflächen (5) an dem zweiten Lichtleiter (6) befindet,
• wobei sich die zweite Eintrittsfläche (2) für den Lichteintritt zwischen der zweiten Kollimationsfläche (3) und dem zweiten Paar der ersten Reflexionsflächen (4) befindet,
• wobei die zweite Kollimationsfläche (3) zur Reflexion eines Teils des Lichts entlang der zweiten optischen Achse (14) des zweiten Lichtleiters (6) direkt auf die zweite Austrittsfläche (8) und zur Reflexion eines Teils des Lichts entlang der zweiten optischen Achse (14) des zweiten Lichtleiters (6) auf das zweite Paar der ersten Reflexionsflächen (4) beschaffen ist,
• wobei jede zweite Reflexionsfläche des zweiten Paars der ersten Reflexionsflächen (4) zur Reflexion des Lichts von der zweiten Kollimationsfläche (3) zu einer Reflexionsfläche aus dem zweiten Paar der zweiten Reflexionsflächen (5) beschaffen ist und jedes von dem zweiten Paar der zweiten Reflexionsflächen (5) zur Reflexion des Lichts von der jeweiligen ersten Reflexionsfläche (4) auf die zweite Austrittsfläche (8) beschaffen ist,
• wobei der zweite Lichtleiter (6) und der zweite reflektierende Vorsprung (7) aus demselben Materialblock wie der erste Lichtleiter (6) und der erste reflektierende Vorsprung (7) hergestellt sind.

13. Optisches Element für einen Fahrzeugscheinwerfer nach Anspruch 12, **dadurch gekennzeichnet, dass** die erste Austrittsfläche (8) und die zweite Austrittsfläche (8) eine gemeinsame Austrittsfläche (15) bilden.
